# EUROPÄISCHE PATENTSCHRIFT

(11) **EP 1 519 108 B1**
(45) Veröffentlichungstag und Bekanntmachung des Hinweises auf die Patenterteilung: **07.12.2011**
(21) Anmeldenummer: 04018433.5
(22) Anmeldetag: 04.08.2004
(51) Int. Cl.: F22B 1/00, F22G 1/16, F03G 6/06

(54) **Verfahren zur Erzeugung von überhitztem Dampf, Dampferzeugungsstufe für ein Kraftwerk und Kraftwerk**
Process for the generation of superheated steam, steam generator for a power plant and power plant
Procédé pour la génération de vapeur surchauffée, générateur de vapeur pour centrale et centrale d'énergie

(30) Priorität: 25.09.2003 DE 10346255
(43) Veröffentlichungstag der Anmeldung: 30.03.2005
(73) Patentinhaber: Deutsches Zentrum für Luft- und Raumfahrt e.V., 51147 Köln (DE)
(72) Erfinder: Buck, Reiner, Dr., 70563 Stuttgart (DE); Eck, Markus, Dr., 71229 Leonberg (DE); Steinmann, Wolf-Dieter, Dr., 71034 Böblingen (DE)
(74) Vertreter: Hoeger, Stellrecht & Partner Patentanwälte

(56) Entgegenhaltungen:
- DE-A- 4 126 038
- DE-C- 10 128 562
- FR-A- 2 438 804
- US-A- 5 619 933
- GEYER UND H KLAISS M: "194 MW Solarstrom mit Rinnenkollektoren" BWK BRENNSTOFF WARME KRAFT, VDI VERLAG GMBH. DUSSELDORF, DE, Bd. 41, Nr. 6, Juni 1989 (1989-06), Seiten 288-295, XP002124842 ISSN: 0006-9612

## Beschreibung

Die Erfindung betrifft ein Verfahren zur solarthermischen Erzeugung von überhitztem Dampf, bei welchem in einem Verdampfer erzeugter Dampf in einem Überhitzer überhitzt wird, wobei der Verdampfer solar beheizt wird und der Überhitzer solar beheizt wird.

Solche Verfahren werden insbesondere in Kraftwerken wie Dampfkraftwerken oder Gas- und Dampfkraftwerken eingesetzt, um überhitzten Dampf zu erzeugen, welcher dann einer Dampfturbine zugeführt wird.

Die Erfindung betrifft ferner eine Dampferzeugungsstufe für ein solarthermisches Kraftwerk, umfassend einen Verdampfer zur Erzeugung von Dampf, mindestens einen Strahlungsempfänger zur Beheizung des Verdampfers, einen Überhitzer zur Überhitzung des Dampfs und zur Beheizung des Arbeitsmediums und mindestens einen Strahlungsempfänger zur Beheizung eines Arbeitsmediums.

Weiterhin betrifft die Erfindung ein solarthermisches Kraftwerk mit einer Dampfturbine.

Aus den Artikeln "An Update on Solar Central Receiver Systems, Projekts, and Technologies" von M. Romero et al. in Transactions of the ASME, Vol. 124, May 2002, Seiten 98 - 108 und "Advances in Parabolic Trough Solar Power Technology" von H. Price et al. in Journal of Solar Energy Engineering, Vol. 124, May 2002, Seiten 109 - 125 sind Kraftwerkskonzepte in Zusammenhang mit der Erzeugung von überhitztem Dampf bekannt.

Aus dem Artikel "194 MW Solarstrom mit Rinnenkollektoren" von M. Geyer und H. Klaiß in BWK Bd. 41 (1989) Nr. 6 sind unterschiedliche Konzepte für solarthermische Anlagen bekannt.

Aus der US 5,619,933 ist ein Verfahren bekannt, welches eingesetzt wird, wenn problematische Brennstoffe verbrannt werden. Es werden dabei produzierte heiße Gase physikalisch von einem Überhitzer der Anlage getrennt, wobei ein Teil der heißen Gase durch einen Wärmetauscher strömt, in welchem ein Energieträger aufgeheizt wird und die Wärme auf den Überhitzer überträgt. Dadurch lassen sich Temperaturkorrosionsprobleme vermeiden.

Der Erfindung liegt die Aufgabe zugrunde, das eingangs genannte Verfahren so zu verbessern, daß sich ein verbesserter Wirkungsgrad ergibt.

Diese Aufgabe wird bei dem eingangs genannten Verfahren erfindungsgemäß dadurch gelöst, daß der Verdampfer getrennt und unabhängig vom Überhitzer geheizt wird, wobei der Verdampfer direkt beheizt wird und der Überhitzer mittels eines Arbeitsmediums geheizt wird.

Durch die Trennung von Verdampfung und Überhitzung (bezüglich deren jeweiliger Beheizung) können die jeweiligen Temperaturniveaus getrennt angepaßt werden. Dadurch läßt sich ein verbesserter Gesamtwirkungsgrad erreichen, der gegenüber konventionellen Konzepten 10 % höher sein kann.

Durch die Trennung zwischen Verdampfung und Überhitzung in unterschiedliche Systeme läßt sich ein Wegfall der Pinch-Point-Bedingung erreichen. Der Pinch-Point ist diejenige Enthalpie, bei der Wärmeübertragungskurven durch eine minimale Temperaturdifferenz getrennt sind. Wenn Verdampfer und Überhitzer im gleichen System angeordnet sind, dann wird dadurch eine Bedingung für den Pinch-Point definiert, welche wiederum Vorgaben für die Temperatur beispielsweise eines Arbeitsmediums definiert, welches zur Beheizung des Überhitzers dient. Da erfindungsgemäß Verdampfung und Überhitzung getrennt sind, fällt eben diese Pinch-Point-Bedingung weg. Es läßt sich dadurch insbesondere erreichen, daß ein Arbeitsmedium zur Beheizung des Überhitzers auf einer niedrigeren Temperatur dem Überhitzer zugeführt werden kann, wobei trotzdem noch eine gleiche Ausgangstemperatur für überhitzten Dampf erzielbar ist. Durch die erfindungsgemäße Lösung sind dann wiederum die Materialanforderungen für eine Arbeitsmediumführung verringert und der Wartungsaufwand ist ebenfalls entsprechend verringert.

Bei der solarthermischen Beheizung können Rinnenkollektorenkonzepte oder Turmkonzepte eingesetzt werden, wobei für den Überhitzer Turmkonzepte bevorzugt sind.

Wenn der Verdampfer unabhängig vom Überhitzer geheizt wird, fällt die Pinch-Point-Bedingung weg. Außerdem lassen sich die einzelnen Systemkomponenten getrennt optimieren und entsprechend lassen sich die Temperaturniveaus in den unterschiedlichen Systemen getrennt einstellen, so daß sich insgesamt ein verbesserter Wirkungsgrad ergibt.

Ganz besonders vorteilhaft ist es, wenn der Überhitzer in einem ersten Heizsystem geheizt wird und der Verdampfer in einem zweiten Heizsystem geheizt wird. Dadurch läßt sich eine Trennung bezüglich der Beheizung durchführen und es kann so insbesondere bezüglich der Temperaturniveaus eine getrennte Optimierung stattfinden, die wiederum zu einem optimierten Gesamtwirkungsgrad führt.

Aus dem gleichen Grund ist es besonders vorteilhaft, wenn das erste Heizsystem und das zweite Heizsystem entkoppelt sind.

Es kann vorgesehen sein, daß eine Vorwärmung von zu verdampfendem Wasser mittels Restwärme des Überhitzers oder des Verdampfers erfolgt. Günstig ist es dabei, wenn ein entsprechender Vorwärmer an den Überhitzer gekoppelt ist und damit im ersten Heizsystem liegt.

Der Überhitzer wird mittels eines Arbeitsmediums geheizt. Bei dem Arbeitsmedium handelt es sich insbesondere um Luft. Da durch die erfindungsgemäße Lösung die Pinch-Point-Bedingung wegfällt, kann Arbeitsmedium mit einer niedrigeren Arbeitstemperatur dem Überhitzer zugeführt werden. Dadurch sind die Materialanforderungen an eine Arbeitsmediumführung verringert, wobei man insgesamt einen höheren Wirkungsgrad erreichen kann.

Insbesondere ist dann der Verdampfer von einer Arbeitsmediumführung des Arbeitsmediums zur Heizung des Überhitzers entkoppelt. Das Arbeitsmedium, welches den Überhitzer heizt, beaufschlagt also den Verdampfer nicht. Dadurch lassen sich getrennte Heizsysteme realisieren.

Günstig ist es weiterhin, wenn der Überhitzer und der Verdampfer getrennte Heizquellen für die direkte Wärmeübertragung auf Dampf/Wasser aufweisen. Bei diesen Heizquellen handelt es sich um "sekundäre" Heizquellen. Beispielsweise ist die Heizquelle für den Überhitzer eine Heizquelle zur Erhitzung von Arbeitsmedium bzw. das erhitzte Arbeitsmedium selber, während ein Verdampfer direkt beheizt wird.

Es kann vorgesehen sein, daß eine Vorwärmung für zu verdampfendes Wasser mittels eines Arbeitsmediums zur Heizung des Überhitzers erfolgt. Die Restwärme des Überhitzers wird dann dazu ausgenutzt, um Wasser vorzuwärmen, welches dem Verdampfer zugeführt wird. Die Beheizung des Verdampfers selber ist aber bei der erfindungsgemäßen Lösung unabhängig von der Beheizung des Überhitzers. Grundsätzlich ist es auch möglich, daß die Restwärme des Verdampfers genutzt wird, um eine Vorwärmung von Wasser, welches dem Verdampfer zur Dampferzeugung zugeführt wird, durchzuführen.

Insbesondere ist ein Vorwärmer dem Überhitzer bezüglich der Strömungsrichtung des Arbeitsmediums nachgeschaltet, um so die Restwärme des Überhitzers nutzen zu können.

Der Überhitzer wird solar beheizt, beispielsweise mittels eines Turmreceivers. Als Arbeitsmedium kann Luft oder Dampf oder Salz oder ein Thermoöl eingesetzt werden.

Bei einer konstruktiv einfachen Ausführungsform wird als Arbeitsmedium Luft eingesetzt. Luft läßt sich in einem volumetrischen Receiver aufheizen. Es muß kein geschlossener Kreislauf für das Arbeitsmedium vorgesehen werden.

Der Verdampfer wird direkt beheizt. Bei der direkten Beheizung werden Führungsrohre für Wasser/Dampf im Dampferzeuger direkt beheizt indem sie mit konzentrierter Solarstrahlung beaufschlagt werden.

Der Verdampfer wird solarbeheizt.

Bei einer vorteilhaften Ausführungsform werden ein Aufheizungsbereich für den Verdampfer und ein Aufheizungsbereich für den Überhitzer von der gleichen (primären) Heizquelle beheizt. Beispielsweise wird konzentrierte Solarstrahlung auf den Aufheizungsbereich für den Verdampfer und den Aufheizungsbereich für den Überhitzer gerichtet. Dadurch läßt sich ein kompakter Aufbau mit guter Wärmeausnutzung erzielen.

Insbesondere liegen ein Aufheizungsbereich für den Verdampfer und ein Aufheizungsbereich für den Überhitzer in einem gemeinsamen Beaufschlagungsbereich für Solarstrahlung, so daß konzentrierte Solarstrahlung, welche beispielsweise von einem Heliostatenfeld stammt, gleichzeitig den Aufheizungsbereich für den Verdampfer und den Aufheizungsbereich für den Überhitzer beaufschlägt. Dadurch läßt sich ein hoher Flächenwirkungsgrad bezüglich der Solarstrahlungsbeaufschlagung erzielen.

Der Erfindung liegt ferner die Aufgabe zugrunde, eine Dampferzeugungsstufe der eingangs genannten Art bereitzustellen, mittels welcher sich in einem Kraftwerk ein optimierter Wirkungsgrad erzielen läßt.

Diese Aufgabe wird bei der eingangs genannten Dampferzeugungsstufe erfindungsgemäß dadurch gelöst, daß der Verdampfer und der Überhitzer bezüglich ihrer Beheizung entkoppelt sind, wobei der Verdampfer direkt beheizt ist und der Überhitzer mittels des Arbeitsmediums beheizt ist.

Durch die Entkopplung der Beheizung von Verdampfer und Überhitzer lassen sich die einzelnen Beheizungssysteme getrennt optimieren. Dadurch läßt sich ein verbesserter Wirkungsgrad erzielen. Insbesondere wird ein Wegfall der Pinch-Point-Bedingung erreicht.

Weitere Vorteile der erfindungsgemäßen Dampferzeugungsstufe wurden im Zusammenhang mit dem erfindungsgemäßen Verfahren erläutert.

Weitere vorteilhafte Ausgestaltungen wurden ebenfalls bereits im Zusammenhang mit dem erfindungsgemäßen Verfahren erläutert.

Es kann vorgesehen sein, daß ein Vorwärmer für Wasser bezüglich seiner Beheizung von dem Verdampfer entkoppelt ist. Dadurch läßt sich die Verdampfung optimiert ausgestalten.

Es kann dann vorgesehen sein, daß der Vorwärmer bezüglich seiner Beheizung an den Überhitzer gekoppelt ist und insbesondere die Restwärme des Überhitzers genutzt wird, um eine Vorwärmung von Wasser, welches dann dem Verdampfer zur Dampferzeugung zugeführt wird, durchzuführen.

Der Überhitzer ist mittels eines Arbeitsmediums wie Luft beheizbar. Luft wird solarthermisch beheizt, und diese heiße Luft wird dann zur Beheizung des Überhitzers genutzt, welcher wiederum in dem Verdampfer erzeugten Dampf überhitzt.

Es ist dann günstig, wenn der Überhitzer an eine Führung für Arbeitsmedium gekoppelt ist und ebenfalls ein Vorwärmer an die Führung für Arbeitsmedium gekoppelt ist.

Ganz besonders vorteilhaft ist es, wenn ein erstes Heizsystem zur Beheizung des Überhitzers und ein zweites Heizsystem zur Beheizung des Verdampfers vorgesehen ist. Diese beiden Heizsysteme lassen sich bezüglich Temperaturniveaus und Systemkomponenten getrennt optimieren. Dadurch läßt sich eine Verbesserung des Gesamtwirkungsgrads erzielen.

Günstig ist es, wenn ein Vorwärmer an das erste Heizsystem gekoppelt ist.

Das erste Heizsystem ist solar beheizt. Auch das zweite Heizsystem ist solar beheizt.

Der Verdampfer ist direkt beheizt.

Zur Beheizung des Verdampfers ist mindestens ein Strahlungsempfänger (Absorber und/oder Receiver) vorgesehen. Der Verdampfer selber kann als Strahlungsempfänger ausgebildet sein.

Zur Beheizung des Arbeitsmediums ist ferner mindestens ein Strahlungsempfänger vorgesehen. Das aufgeheizte Arbeitsmedium wird dann dem Überhitzer zugeführt.

Ein kompakter Aufbau läßt sich erzielen, wenn ein Aufheizungsbereich für einen Verdampfer und ein Aufheizungsbereich für den Überhitzer hintereinander angeordnet sind. Dadurch kann eine "integrale" Aufheizung erfolgen, wobei jedoch Überhitzer und Verdampfer bezüglich ihrer Beheizung getrennt sind. Durch die Hintereinanderanordnung der Aufheizungsbereiche lassen sich auch Wärmeverluste minimieren.

Der Aufheizungsbereich für den Verdampfer und der Aufheizungsbereich für den Überhitzer sind insbesondere integral angeordnet, d. h. sind in einem integralen Receiver angeordnet. Dadurch läßt sich ein kompakter Aufbau erzielen. Auch der Aufwand, um beispielsweise Solarstrahlung zu konzentrieren, läßt sich so verringern.

Insbesondere liegen die Aufheizungsbereiche in einem Beaufschlagungsbereich für Solarstrahlung. Dadurch ist der Aufwand für die Richtung der Solarstrahlung minimiert.

Ein erfindungsgemäßes Kraftwerk und insbesondere solarthermisches Kraftwerk mit einer Dampfturbine umfaßt eine erfindungsgemäße Dampferzeugungsstufe.

Ein solches Kraftwerk weist die bereits oben im Zusammenhang mit dem erfindungsgemäßen Verfahren und der erfindungsgemäßen Dampferzeugungsstufe erläuterten Vorteile auf.

Die nachfolgende Beschreibung bevorzugter Ausführungsformen dient im Zusammenhang mit der Zeichnung der näheren Erläuterung der Erfindung. Es zeigen:
- Figur 1: eine schematische Darstellung eines bekannten Kraftwerks- konzepts mit einer Dampferzeugungsstufe und einer Dampf- turbine;
- Figur 2: ein Temperatur-Enthalpie-Diagramm in schematischer Dar- stellung für das Kraftwerkskonzept gemäß Figur 1;
- Figur 3: ein erstes Ausführungsbeispiel einer erfindungsgemäßen Dampferzeugungsstufe;
- Figur 4: ein Temperatur-Enthalpie-Diagramm für die Dampferzeugungs- stufe gemäß Figur 3;
- Figur 5: ein Ausführungsbeispiel einer Dampferzeugungsstufe, welches nicht unter die Ansprüche fällt;
- Figur 6: ein weiteres Ausführungsbeispiel einer Dampferzeugungsstufe, welches nicht unter die Ansprüche fällt;
- Figur 7: ein weiteres Ausführungsbeispiel einer erfindungsgemäßen Dampferzeugungsstufe;
- Figur 8: eine schematische Darstellung eines Ausführungsbeispiels für die integrale Beheizung von Verdampfer und Erhitzung von Ar- beitsmedium und
- Figur 9: ein weiteres Ausführungsbeispiel für die integrale Beheizung von Verdampfer und Erhitzung von Arbeitsmedium.

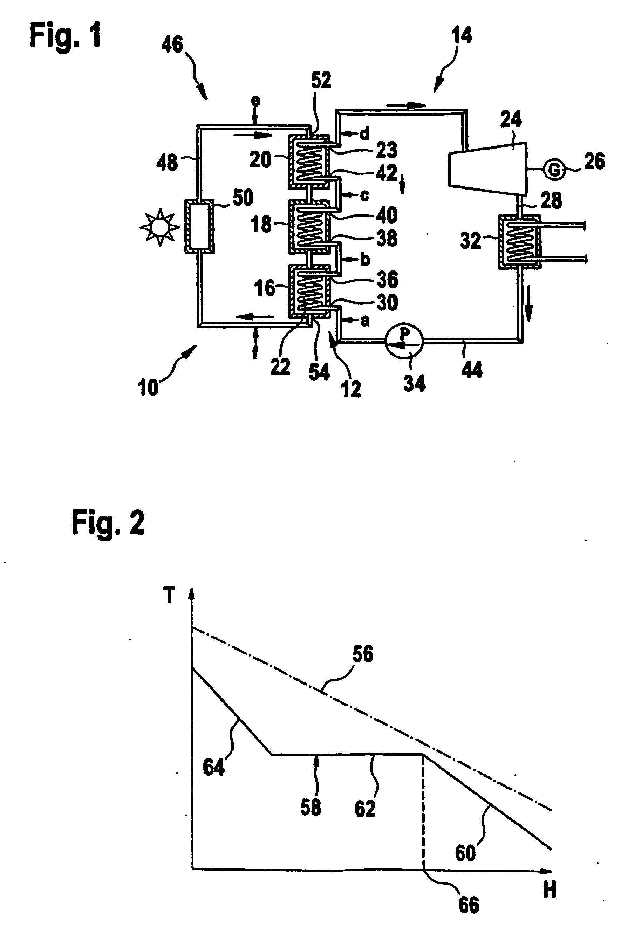

Ein bekanntes Kraftwerk, welches in Figur 1 gezeigt und dort als Ganzes mit 10 bezeichnet ist, umfasst eine Dampferzeugungsstufe 12 und eine Turbinenstufe 14. Die Dampferzeugungsstufe 12 umfasst einen Vorwärmer 16, einen Verdampfer 18 und einen Überhitzer 20. Vorwärmer 16, Verdampfer 18 und Überhitzer 20 weisen jeweils Wärmetauscherflächen 22 auf, an denen Wasser bzw. Dampf Wärme aufnehmen kann zur Vorwärmung (im Vorwärmer 16), zur Verdampfung (im Verdampfer 18) oder zur Überhitzung des Dampfes (im Überhitzer 20).

Ein Ausgang 23 des Überhitzers 20, welcher ein Ausgang für überhitzten Dampf ist, ist an eine Dampfturbine 24 gekoppelt, welche einen Generator 26 antreibt. In der Dampfturbine 24 findet eine Entspannung des Dampfes statt und die entsprechende mechanische Energie wird zur Erzeugung elektrischen Stroms eingesetzt.

Von der Dampfturbine 24 führt eine Leitung 28 zu einem Eingang 30 des Vorwärmers 16. Der Eingang 30 ist ein Eingang für Speisewasser. Dieses Speisewasser wird in dem Vorwärmer 16 vorgewärmt.

In der Leitung 28 ist ein Wärmetauscher 32 angeordnet. Das (flüssige) Speisewasser wird über eine Pumpe 34 zu dem Vorwärmer 16 befördert.

Ein Ausgang 36 des Vorwärmers 16 ist mit einem Eingang 38 des Verdampfers 18 verbunden. An dem Eingang 38 wird dem Verdampfer 18 vorgewärmtes Wasser bereitgestellt.

Ein Ausgang 40 des Verdampfers 18 ist mit einem Eingang 42 des Überhitzers 20 verbunden. Über den Ausgang 40 wird dem Überhitzer 20 Dampf zur Überhitzung im Überhitzer 20 bereitgestellt.

Die Dampferzeugungsstufe 12 und die Turbinenstufe 14 sind über einen Wasser/Dampf-Kreislauf 44 miteinander verbunden.

Zur Beheizung des Vorwärmers 16, des Verdampfers 18 und des Überhitzers 20 ist ein Arbeitsmedium-Kreislauf 46 vorgesehen, wobei der Vorwärmer 16, der Verdampfer 18 und der Überhitzer 20 an eine Arbeitsmediumführung 48 gekoppelt sind. In der Arbeitsmediumführung 48 ist eine Heizquelle 50 angeordnet, in welcher das in dem Arbeitsmedium-Kreislauf 46 geführte Arbeitsmedium wie Luft aufheizbar ist. Beispielsweise wird das Arbeitsmedium über die Heizquelle 50 solar oder über Verbrennungsvorgänge aufgeheizt. Das in der Heizquelle 50 aufgeheizte Arbeitsmedium wird einem Eingang 52 des Überhitzers 20 zugeführt, um entsprechend für die Überhitzung des durch den Überhitzer 20 durchgeführten Dampfes zu sorgen. Nach Durchströmung des Überhitzers 20 durchströmt das entsprechend abgekühlte Arbeitsmedium den Verdampfer 18. Im Verdampfer 18 bewirkt das Arbeitsmedium die Verdampfung des Wassers. Von dem Verdampfer 18 wird es dann dem Vorwärmer 16 zugeführt. Dort wird die Restwärme des Verdampfers 18 genutzt, um über den Eingang 30 eingekoppeltes Speisewasser vorzuwärmen.

Von einem Ausgang 54 des Vorwärmers 16, welcher ein Ausgang für Arbeitsmedium ist, wird das Arbeitsmedium dann zu der Heizquelle 50 zur Aufheizung zurückgeführt.

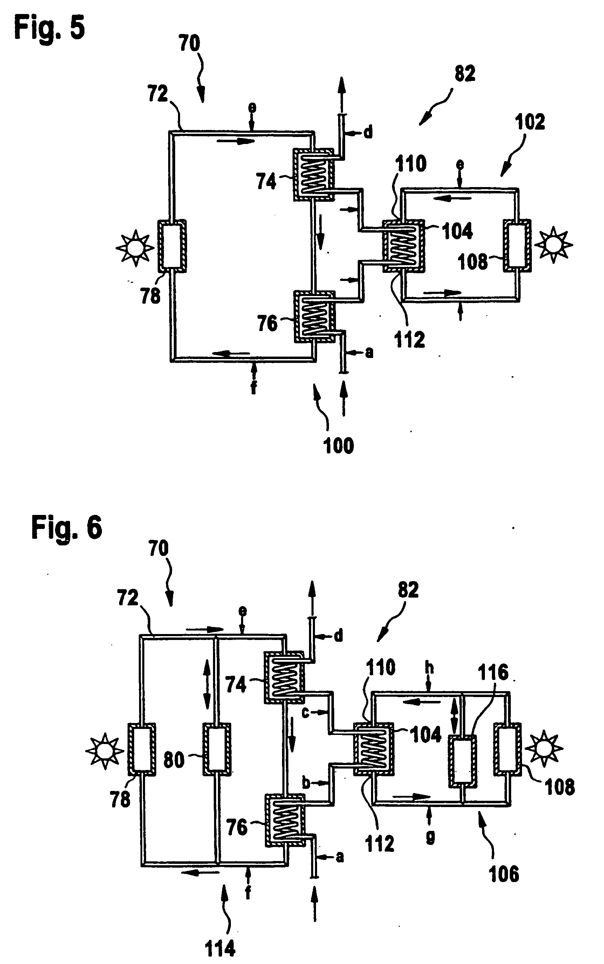

Ein solches Kraftwerkschema ist beispielsweise in der Figur 6 des Artikels "An Update on Solar Central Receiver Systems, Projects, and Technologies" von M. Romero et al. in Transactions of the ASME, Vol. 124, May 2002, Seiten 98 - 108 gezeigt.

In der unten stehenden Tabelle sind beispielhaft typische Temperaturen an den Punkten a, b, c, d im Wasser/Dampf-Kreislauf 44 und an den Punkten e und f im Arbeitsmedium-Kreislauf 46 für das Kraftwerk 10 angegeben, wenn man von einem Verdampferdruck von 120 bar ausgeht und von Luft als Arbeitsmedium. Damit überhitzter Dampf mit einer Temperatur von 540°C der Dampfturbine 24 zugeführt werden kann, muß Luft als Arbeitsmedium mit einer Temperatur von 800°C in den Überhitzer 20 am Eingang 52 eingekoppelt werden.

| | Figur 1 | Figur 3 | Figur 5 | Figur 6 |
|---|---|---|---|---|
| a | 40°C | 40°C | 40°C | 40°C |
| b | 320°C | 320°C | 320°C | 320°C |
| c | 320°C | 320°C | 320°C | 320°C |
| d | 540°C | 540°C | 540°C | 540°C |
| e | 800°C | 600°C | 600°C | 600°C |
| f | 120°C | 120°C | 120°C | 120°C |
| g | - | - | 350°C | 350°C |
| h | - | - | 400°C | 400°C |

In Figur 2 ist schematisch die Temperatur über der Enthalpie (übertragenen Wärme) für das Kraftwerkskonzept gemäß Figur 1 gezeigt. Die Kurve 56 zeigt die T-H-Abhängigkeit für Luft als Arbeitsmedium. Die Abhängigkeit ist im wesentlichen linear; je höher die Temperatur, desto höher ist auch die Wärme, die übertragen werden kann.

Die untere Kurve 58 entspricht Wasser/Dampf. Sie umfaßt einen im wesentlichen linearen Vorwärmbereich für das Durchlaufen des Vorwärmers 16, einen im wesentlichen temperaturunabhängigen Verdampfungsbereich für die Verdampfung im Verdampfer 18 und einen Überhitzungsbereich 64, welcher im wesentlichen linear ist, für die Überhitzung des im Verdampfer 18 erzeugten Dampfes im Überhitzer 20.

Der Pinch-Point ist definiert als diejenige Enthalpie, an welcher die Kurven 56 und 58 den minimalen Abstand haben. Er ist in Figur 2 mit 66 bezeichnet. Dieser Pinch-Point legt die Eintrittstemperatur des Arbeitsmediums am Eingang 52 des Überhitzers 20 und die Austrittstemperatur am Vorwärmer 16 fest. Da aufgrund des Verdampfers 18 die Temperatur für die Kurve 56 am Pinch-Point 66 relativ hoch liegt, muß die Eintrittstemperatur am Eingang 52 entsprechend hoch gewählt werden.

Erfindungsgemäß ist es vorgesehen, daß der Verdampfer in einer Dampferzeugungsstufe mindestens von dem Überhitzer getrennt ist, um so die Pinch-Point-Problematik zu umgehen.

Bei einem ersten Ausführungsbeispiel der erfindungsgemäßen Lösung umfaßt eine Dampferzeugungsstufe 68 einen Arbeitsmedium-Kreislauf 70. In die entsprechende Arbeitsmediumführung 72 ist ein Überhitzer 74 und diesem bezüglich der Arbeitsmediumführung nachgeschaltet ein Vorwärmer 76 angeordnet. Des weiteren ist eine Heizquelle 78 in dem Arbeitsmedium-Kreislauf 70 angeordnet. Über die Heizquelle 78, bei der es sich um einen Strahlungsempfänger wie beispielsweise um einen Absorber für Solarstrahlung oder um einen volumetrischen Receiver handelt, wird das Arbeitsmedium aufgeheizt, wobei das Arbeitsmedium als "sekundäre" Heizquelle dann wiederum den Überhitzer 74 und den Vorwärmer 76 heizt.

Es kann auch vorgesehen sein, daß in dem Arbeitsmedium-Kreislauf 70 ein Wärmespeicher 80 angeordnet ist, um Wärme speichern zu können. Als Wärmespeicher 80 können bei Luft als Arbeitsmedium beispielsweise Schüttgutspeicher oder Sandspeicher eingesetzt werden.

Mittels des Überhitzers 74 und des Vorwärmers 76 ist ein erstes Heizsystem 82 gebildet, über das sich Wasser/Dampf beheizen läßt. Der Vorwärmer 76 heizt Speisewasser vor und der Überhitzer 74 überhitzt Dampf, welcher von einem Verdampfer 84 erzeugt wurde. Der Verdampfer 84 selber ist an ein zweites Heizsystem 86 gekoppelt oder ist ein Teil dieses Heizsystems. Dieses zweite Heizsystem 86 wird solar beheizt, wobei der Verdampfer direkt beheizt wird, um aus dem durch den Vorwärmer 76 vorgewärmten Wasser Dampf zu erzeugen.

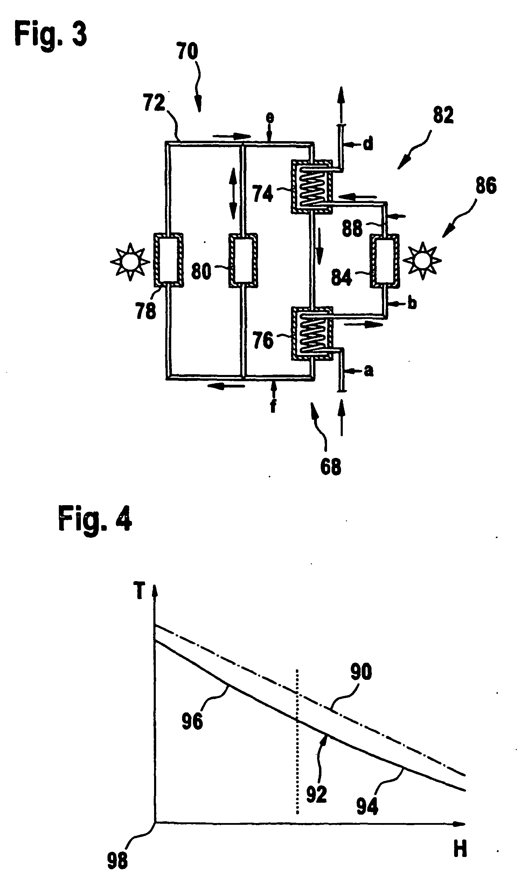

Bei dem in Figur 3 gezeigten Ausführungsbeispiel ist der Verdampfer 84 direkt solar beheizt, d. h. er ist mit entsprechenden Absorberflächen versehen, auf die konzentrierte Solarstrahlung gerichtet ist. Es erfolgt dann eine Aufheizung des den Verdampfer durchströmenden Wassers, welche zur Dampfbildung führt. Der Verdampfer 84 stellt damit eine Art "sekundäre" Heizquelle dar.

Das zweite Heizsystem 86 ist bezüglich der Beheizung unabhängig von dem ersten Heizsystem 82 zur Heizung des Überhitzers 74 und bezüglich der Beheizung entkoppelt vom Überhitzer 74.

Dadurch läßt sich ein Verdampferpfad 88 des zweiten Heizsystems 86 getrennt von dem Arbeitsmedium-Kreislauf 70 optimieren. Durch die Trennung von Verdampfung und Überhitzung in zwei Heizsysteme 86, 82 lassen sich die entsprechenden Temperaturniveaus getrennt anpassen. Dadurch läßt sich eine Verbesserung im Gesamtwirkungsgrad erzielen, der 10 % oder mehr betragen kann. (Der Gesamtwirkungsgrad bezieht sich auf ein Kraftwerk mit Turbinenstufe. Die Turbinenstufe bei dem Ausführungsbeispiel gemäß Figur 3 ist grundsätzlich gleich ausgebildet wie oben im Zusammenhang mit der Figur 1 beschrieben.)

Das Arbeitsmedium läßt sich mit niedrigerer Temperatur in den Überhitzer 74 einkoppeln. Dadurch wiederum sind die Materialanforderungen für den Überhitzer 74 reduziert, so daß sich diese Komponente kostengünstiger herstellen läßt und entsprechend der Wartungsaufwand auch verringert ist.

In der oben genannten Tabelle sind die entsprechenden Temperaturen wiederum für die Punkte a (Eingang Vorwärmer), b (Eingang Verdampfer), c (Eingang Überhitzer) und d (Ausgang Überhitzer) sowie e (Eingang für Arbeitsmedium des Überhitzers) und f (Ausgang des Vorwärmers für Arbeitsmedium) angegeben. Bei gleicher Austrittstemperatur des Dampfes (Punkt d) im Vergleich zu der konventionellen Lösung gemäß Figur 1 kann die Zuführungstemperatur des Arbeitsmediums (Punkt e) um ca. 200°C erniedrigt werden. Die Zahlenbeispiele beruhen darauf, daß auch im Verdampfer 84 wiederum ein Verdampferdruck von 120 bar herrscht.

In Figur 4 ist ein entsprechendes T-H-Diagramm für das Kraftwerkskonzept gemäß Figur 3 dargestellt. Die Kurve 90 ist die T-H-Kurve für Luft als Arbeitsmedium, welches im ersten Heizsystem 82 geheizt wird. Die darunterliegende Kurve 92 ist die Wasser/Dampf-Kurve für das Durchlaufen des ersten Heizsystems 82 der Dampferzeugungsstufe 68. Diese Kurve 92 weist einen Vorwärmbereich 94 und einen Überhitzungsbereich 96 auf. Der Verdampfungsbereich, wie er in Figur 2 mit dem Bezugszeichen 62 gezeigt ist, "fehlt" hier, da der Verdampfer 84 nicht in dem ersten Heizsystem 82 enthalten ist, sondern an das zweite Heizsystem 86 gekoppelt ist.

Der Pinch-Point liegt dadurch nicht an einem Übergang zwischen dem Vorwärmbereich 94 und einem Verdampfungsbereich (da ja ein solcher Verdampfungsbereich nicht vorhanden ist). Dadurch ergibt sich die Möglichkeit, entsprechend die Eintrittstemperatur für Arbeitsmedium (Punkt e) im Vergleich zu dem konventionellen Konzept gemäß Figur 1 abzusenken. Der Pinch-Point ist vorgebbar und wird eben so gewählt, daß auf einer entsprechend niedrigeren Temperatur Arbeitsmedium dem Überhitzer 74 zuführbar ist. In der Figur 4 liegt der Pinch-Point 98 bei der maximal übertragbaren Wärme, d. h. bei der höchsten Temperatur.

Durch die Trennung der Beheizung des Überhitzers 74 (zusammen mit dem Vorwärmer 76) gegenüber dem Verdampfer 84 in ein erstes Heizsystem 82 und in ein zweites Heizsystem 86 ist die "sekundäre" Heizquelle, mittels welcher direkt Wärme auf Wasser/Dampf übertragen wird, in den beiden Heizsystemen getrennt. In dem ersten Heizsystem 82 überträgt Arbeitsmedium in dem Überhitzer 74 Wärme auf den zu überhitzenden Dampf. Dieses Arbeitsmedium steht nicht in Wärmekontakt mit dem Verdampfer 84. Der Verdampfer 84 selber wird durch eine getrennte Heizquelle geheizt.

Beide Heizsysteme 82 und 86 weisen die gleiche primäre Heizquelle auf, nämlich Solarstrahlung. Die Beheizung des zweiten Heizsystems 86 mit dem Verdampfer 84 erfolgt uber eine oder mehrere Kollektorrinnen mit direkter Verdampfung . Der Verdampfer 84 kann beispielsweise auch an einem Turm angeordnet sein, wobei konzentrierte Solarstrahlung für die Erhitzung sorgt.

Das erste Heizsystem 82 ist solar beheizt. Bei der Heizquelle 78 selber kann es sich beispielsweise um einen volumetrischen Receiver handeln.

Bei dem ersten Ausführungsbeispiel gemäß Figur 3 ist der Vorwärmer 76 in das erste Heizsystem 82 eingebunden, d. h. der Vorwärmer 76 wird mittels Restwärme des Überhitzers 74 geheizt. Es ist aber auch möglich, dass der Vorwärmer in das zweite Heizsystem 86 eingebunden ist und dadurch über Restwärme des Verdampfers 84 geheizt wird (in der Figur nicht gezeigt).

Bei einem Ausführungsbeispiel einer Dampferzeugungsstufe, welche nicht unter die Ansprüche fällt und in Figur 5 als Ganzes mit 100 bezeichnet ist, ist der Arbeitsmedium-Kreislauf 70 grundsätzlich gleich aufgebaut, wie im Zusammenhang mit dem ersten Ausführungsbeispiel 68 beschrieben. Es werden deshalb hier gleiche Bezugszeichen verwendet. (In dem Ausführungsbeispiel gemäß Figur 5 ist kein Wärmespeicher gezeigt.) Entsprechend ist auch das erste Heizsystem 82 gleich ausgebildet.

Ein zweites Heizsystem 102 umfasst einen Verdampfer 104, welcher in einem Kreislauf 106 für Wärmeübertragungsmedium angeordnet ist. In diesem Kreislauf 106 ist das Wärmeübertragungsmedium, wie beispielsweise Thermoöl, geführt. Der Kreislauf 106 umfasst dazu eine Heizquelle 108, in welcher das Wärmeübertragungsmedium aufgeheizt wird. Es wird dann einem Eingang 110 des Verdampfers 104 zugeführt, wobei dieser Eingang 110 ein Eingang für Wärmeübertragungsmedium ist. Von einem Ausgang 112 wird abgekühltes Wärmeübertragungsmedium zu der Heizquelle 108 zurückgeführt. Beim Durchlaufen der Strecke zwischen dem Eingang 110 und dem Ausgang 112 in dem Verdampfer 104 gibt das Wärmeübertragungsmedium Wärme an in den Verdampfer 104 eingekoppeltes Wasser ab, um Dampf zu erzeugen.

Die Heizquelle 108 kann solar beheizt sein.

In der obigen Tabelle sind für das Ausführungsbeispiel gemäß Figur 5 an den Punkten g und h typische Temperaturen angegeben, wenn als Wärmeübertragungsmedium ein Thermoöl eingesetzt wird. Der Punkt g liegt in der Niedertemperaturseite des Kreislaufs 106 und der Punkt h in der Hochtemperaturseite.

Es ergeben sich wiederum die oben geschilderten Vorteile.

Bei einem weiteren Ausführungsbeispiel, welches nicht unter die Ansprüche fällt und in Figur 6 gezeigt und dort als Ganzes mit 114 bezeichnet ist, ist das erste Heizsystem und der Arbeitsmedium-Kreislauf grundsätzlich gleich ausgebildet wie oben. Es werden deshalb gleiche Bezugszeichen verwendet. Es kann auch ein Wärmespeicher 80 in dem Arbeitsmedium-Kreislauf 70 vorgesehen sein.

Es ist hier vorgesehen, dass in dem Kreislauf 106 parallel zu dem Eingang 110 und dem Ausgang 112 des Verdampfers 104 ein Wärmespeicher 116 angeordnet ist. Über diesen Wärmespeicher 116 lässt sich erhitztes Wärmeübertragungsmedium zwischenspeichern und bei ausfallender Heizquelle 108 bzw. bei verminderter Heizleistung der Heizquelle 108 läßt sich dem Verdampfer 104 aufgeheiztes Wärmeübertragungsmedium aus dem Wärmespeicher 116 zuführen. Dadurch kann beispielsweise bei einem solarthermischen Kraftwerk bei Wolkenbedeckung die Verdampfung zumindest für einen gewissen Zeitraum aufrechterhalten werden.

Bei dem Wärmespeicher 116 kann es sich beispielsweise um einen Ölspeicher, Betonspeicher oder Salzspeicher handeln. Wenn als Wärmeübertragungsmedium Salz verwendet wird, dann kann dieses Salz in dem Wärmespeicher 116 direkt gespeichert werden.

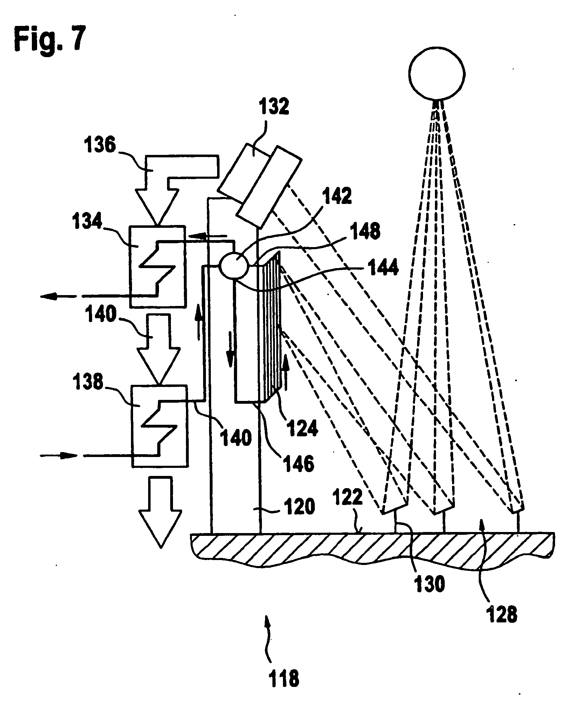

Bei einem weiteren Ausführungsbeispiel einer erfindungsgemäßen Dampferzeugungsstufe, welche in Figur 7 als Ganzes mit 118 bezeichnet ist, ist ein Turm 120 vorgesehen, an dem beabstandet zu dem Boden 122 ein Verdampfer 124 sitzt. Der Verdampfer 124 umfaßt beispielsweise Absorberrohre, auf die konzentrierte Solarstrahlung 126 gerichtet ist. Zur Konzentration der Solarstrahlung ist ein Heliostatenfeld 128 mit einer Mehrzahl von Heliostaten 130 vorgesehen. Diese richten konzentrierte Solarstrahlung auf den Verdampfer 124.

An dem Turm 120 sitzt beabstandet zu dem Boden 122 weiterhin ein Luftreceiver 132, auf den ebenfalls konzentrierte Solarstrahlung gerichtet ist. Über den Luftreceiver 132 wird Luft als Arbeitsmedium erwärmt.

Heiße Luft wird vom Luftreceiver 132 zu einem Überhitzer 134 geführt. Dies ist durch einen Pfeil 136 angedeutet. Von dem Überhitzer 134 wird abgekühlte Luft zu einem Vorwärmer 138 geführt, was durch einen Pfeil 140 angedeutet ist.

Wasser durchströmt den Vorwärmer 138 zur Vorwärmung und ist dann über eine Leitung 140 zu einem Abscheider 142 geführt. Von einem Ausgang 144 für flüssiges Wasser ist eine Leitung 146 zu einem Eingang des Verdampfers 124 geführt. Von einem Ausgang des Verdampfers 124 führt eine Leitung 148 zu einem weiteren Eingang des Abscheiders 142. Von einem Ausgang des Abscheiders 142 führt eine Leitung 150 zu dem Überhitzer 134. In dem Abscheider 142 erfolgt eine Wasser/Dampf-Trennung, so daß sichergestellt ist, daß dem Überhitzer 134 nur Dampf zugeführt wird.

Prinzipiell entspricht das Ausführungsbeispiel gemäß Figur 7 dem in Figur 3 gezeigten Prinzip (ohne Wärmespeicher 80): Der Verdampfer 124 entspricht dem Verdampfer 84 gemäß Figur 3. Der Luftreceiver 132 stellt die (sekundäre) Heizquelle 78 gemäß Figur 3 dar.

Bei dem in Figur 7 gezeigten Ausführungsbeispiel sind wiederum Verdampfung und Überhitzung getrennt, so daß sich die oben beschriebenen Vorteile ergeben.

Es ist grundsätzlich möglich, daß die gleiche primäre Heizquelle sowohl den Verdampfer als auch den Überhitzer heizt. Bei dem Ausführungsbeispiel gemäß Figur 7 heizt die von dem Heliostatenfeld 128 (welche die primäre Heizquelle darstellt) kommende konzentrierte Solarstrahlung sowohl den Verdampfer 124 als auch den Luftreceiver 132, wobei letzterer wiederum das Arbeitsmedium aufheizt, welches dann den Überhitzer 134 beheizt. Es ist grundsätzlich möglich, daß die (sekundären) Heizquellen für Überhitzer und Verdampfer getrennt angeordnet sind.

Es ist auch möglich, beiden Isolarbeheizten Heizquellen räumlich nebeneinander anzuordnen.

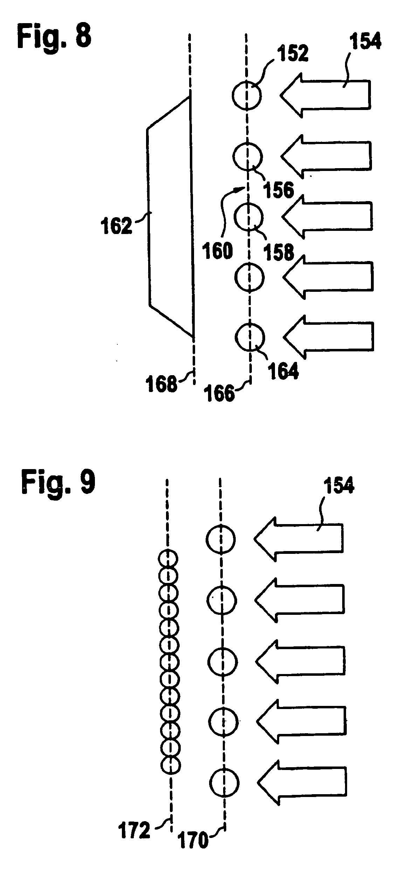

Bei dem Ausführungsbeispiel gemäß Figur 8 ist Wasser/Dampf in einer Mehrzahl von beabstandeten, nebeneinander angeordneten Rohren geführt. Diese Rohre sind als Absorberrohre ausgebildet, welche mit konzentrierter Solarstrahlung 154 beaufschlagt werden. Diese Rohre 152 sind Teil eines Verdampfers oder Vorwärmers. Zwischen benachbarten Rohren 156, 158 ist ein Freiraum 160 gebildet, durch den Solarstrahlung 154 dringen kann. Hinter der Rohrreihe ist ein Aufheizungsbereich 162 für einen Überhitzer oder Vorwärmer angeordnet. In diesem Aufheizungsbereich wird das Arbeitsmedium wie Luft aufgeheizt, welches dann wiederum dem Überhitzer zur Überhitzung zugeführt wird. Der Aufheizungsbereich 162 kann beispielsweise durch einen volumetrischen Receiver gebildet sein. Der Aufheizungsbereich 164 der jeweiligen Rohre 154 ist entsprechend durch eine Absorberfläche gebildet. Die Aufheizungsbereiche 162 und 164 liegen nebeneinander in einem Beaufschlagungsbereich für konzentrierte Solarstrahlung 154. Dadurch ist ein integrierter Receiver gebildet, d. h. eine integrierte Heizquelle für das erste Heizsystem 82 und das zweite Heizsystem 86 bzw. 102.

Dieser integrierte Receiver weist eine erste Ebene 166 als Heizquelle für den Verdampfer auf (beispielsweise entsprechend der Heizquelle 108 gemäß Figur 6) und eine zweite Ebene 168 beispielsweise entsprechend der Heizquelle 78 auf.

Es kann auch vorgesehen sein, wie in Figur 9 schematisch gezeigt, daß hinter einer ersten Ebene, welche mittels eines Rohrregisters 170 gebildet ist und welches als Heizquelle für einen Verdampfer dient, ein zweites Rohrregister 172 angeordnet ist, welches als Heizquelle für einen Überhitzer dient. In dem ersten Rohrregister 170 sind die Rohre beabstandet. In dem zweiten Rohrregister 172 stoßen benachbarte Rohre vorzugsweise unmittelbar aneinander.

## Patentansprüche

1. Verfahren zur solarthermischen Erzeugung von überhitztem Dampf, bei welchem in einem Verdampfer (84) erzeugter Dampf in einem Überhitzer (74) überhitzt wird, wobei der Verdampfer (84) solar beheizt wird und der Überhitzer (74) solar beheizt wird,
**dadurch gekennzeichnet, dass** der Verdampfer (84) getrennt und unabhängig vom Überhitze (74) geheizt wird, wobei der Verdampfers (84) direkt beheizt wird und der Überhitzer (74) mittels eines Arbeitsmediums geheizt wird.

2. Verfahren nach Anspruch 1, **dadurch gekennzeichnet, dass** der Überhitzer (74) in einem ersten Heizsystem (82) geheizt wird und der Verdampfer (84) in einem zweiten Heizsystem (86) geheizt wird.

3. Verfahren nach Anspruch 2, **dadurch gekennzeichnet, dass** das erste Heizsystem (82) und das zweite Heizsystem (86) entkoppelt sind.

4. Verfahren nach einem der vorangehenden Ansprüche, **dadurch gekennzeichnet, dass** eine Vorwärmung von zu verdampfendem Wasser mittels Restwärme des Uberhitzers (74) oder das Verdampfers (84) erfolgt.

5. Verfahren nach einem der vorangehenden Ansprüche, **dadurch gekennzeichnet, dass** der Verdampfer (84) von einer Arbeitsmediumführung des Arbeitsmediums zur Heizung des Überhitzers (74) entkoppelt ist.

6. Verfahren nach einem der vorangehenden Ansprüche, **dadurch gekennzeichnet, dass** eine Vorwärmung für zu verdampfendes Wasser mittels eines Arbeitsmediums zur Heizung des Überhitzers erfolgt.

7. Verfahren nach Anspruch 6, **dadurch gekennzeichnet, dass** ein Vorwärmer (76) dem Überhitzer (74) bezüglich der Strömungsrichtung des Arbeitsmediums nachgeschaltet ist.

8. Verfahren nach einem der vorangehenden Ansprüche, **dadurch gekennzeichnet, dass** als Arbeitsmedium Luft eingesetzt wird.

9. Verfahren nach einem der vorangehenden Ansprüche, **dadurch gekennzeichnet, dass** ein Aufheizungsbereich für den Verdampfer und ein Aufheizungsbereich für den Überhitzer von der gleichen Heizquelle beheizt werden.

10. Verfahren nach Anspruch 9, **dadurch gekennzeichnet, dass** ein Aufheizungsbereich für den Verdampfer und ein Aufheizungsbereich für den Überhitzer in einem gemeinsamen Beaufschlagungsbereich für Solarstrahlung liegen.

11. Dampferzeugungsstufe für ein solarthermisches Kraftwerk, umfassend einen Verdampfer (84; 124) zur Erzeugung von Dampf, mindestens einen Strahlungsempfänger zur Beheizung des Verdampfers (84), einen Überhitzer (74; 134) zur Überhitzung des Dampfs und mindestens einen Strahlungsempfänger zur Beheizung eines Arbeitsmediums, **dadurch gekennzeichnet, dass** der Verdampfer (84; 124) und der Überhitzer (74; 134) bezüglich ihrer Beheizung entkoppelt sind, wobei der Verdampfer (84) direkt beheizt ist und der Überhitzer (74; 134) mittels des Arbeitsmediums beheizt ist.

12. Dampferzeugungsstufe nach Anspruch 11, **dadurch gekennzeichnet, dass** ein Vorwärmer (76; 138) für Wasser bezüglich seiner Beheizung von dem Verdampfer (84; 124) entkoppelt ist.

13. Dampferzeugungsstufe nach Anspruch 12, **dadurch gekennzeichnet, dass** der Vorwärmer (76; 138) bezüglich seiner Beheizung an den Überhitzer (74; 134) gekoppelt ist.

14. Dampferzeugungsstufe nach einem der Ansprüche 11 bis 13, **dadurch gekennzeichnet, dass** der Überhitzer (74; 134) an eine Führung (72) für Arbeitsmedium gekoppelt ist.

15. Dampferzeugungsstufe nach Anspruch 14, **dadurch gekennzeichnet, dass** ein Vorwärmer (76; 138) an eine Führung (72) für Arbeitsmedium gekoppelt ist.

16. Dampferzeugungsstufe nach einem der Ansprüche 11 bis 15, **dadurch gekennzeichnet, dass** das Arbeitsmedium Luft ist.

17. Dampferzeugungsstufe nach einem der Ansprüche 11 bis 16, **gekennzeichnet durch** ein erstes Heizsystem (82) zur Beheizung des Überhitzers (74) und ein getrenntes zweites Heizsystem (86; 12) zur Beheizung des Verdampfers (84).

18. Dampferzeugungsstufe nach Anspruch 17, **dadurch gekennzeichnet, dass** ein Vorwärmer (76) an das erste Heizsystem (82) gekoppelt ist.

19. Dampferzeugungsstufe nach einem der Ansprüche 11 bis 18, **dadurch gekennzeichnet, dass** ein Aufheizungsbereich (162) für den Verdampfer und ein Aufheizungsbereich (164) für den Überhitzer hintereinander angeordnet sind.

20. Dampferzeugungsstufe nach Anspruch 19, **dadurch gekennzeichnet, dass** der Aufheizungsbereich (162) für den Verdampfer und der Aufheizungsbereich (164) für den Überhitzer integral angeordnet sind.

21. Dampferzeugungsstufe nach Anspruch 19 oder 20, **dadurch gekennzeichnet, dass** die Aufheizungsbereiche (162, 164) in einem Beaufschlagungsbereich für Solarstrahlung (154) liegen.

22. Solarthermisches Kraftwerk, mit einer Dampfturbine (24), welches eine Dampferzeugungsstufe gemäß einem der Ansprüche 11 bis 21 umfasst.

## Claims

1. Method for solar thermal generation of superheated steam, in which steam generated in an evaporator (84) is superheated in a superheater (74), wherein the evaporator (84) is solar-heated and the superheater (74) is solar-heated,
**characterized in that** the evaporator (84) is heated separately from and independently of the superheater (74), wherein the evaporator (84) is heated directly and the superheater (74) is heated by means of a working medium.

2. Method in accordance with claim 1, **characterized in that** the superheater (74) is heated in a first heating system (82) and the evaporator (84) is heated in a second heating system (86).

3. Method in accordance with claim 2, **characterized in that** the first heating system (82) and the second heating system (86) are decoupled.

4. Method in accordance with any one of the preceding claims, **characterized in that** water to be evaporated is preheated by means of residual heat from the superheater (74) or evaporator (84).

5. Method in accordance with any one of the preceding claims, **characterized in that** the evaporator (84) is decoupled from a working medium conduit of the working medium for heating the superheater (74).

6. Method in accordance with any one of the preceding claims, **characterized in that** water to be evaporated is preheated by means of a working medium for heating the superheater.

7. Method in accordance with claim 6, **characterized in that** a preheater (76) is arranged downstream of the superheater (74) with respect to the direction of flow of the working medium.

8. Method in accordance with any one of the preceding claims, **characterized in that** air is used as the working medium.

9. Method in accordance with any one of the preceding claims, **characterized in that** a heating region for the evaporator and a heating region for the superheater are heated by the same heating source.

10. Method in accordance with claim 9, **characterized in that** a heating region for the evaporator and a heating region for the superheater lie in a common area of exposure to solar radiation.

11. Steam generating stage for a solar thermal power plant, comprising an evaporator (84; 124) for generating steam, at least one radiation receiver for heating the evaporator (84), a superheater (74; 134) for superheating the steam and at least one radiation receiver for heating a working medium, **characterized in that** the evaporator (84; 124) and the superheater (74; 134) are decoupled in terms of their heating, wherein the evaporator (84) is heated directly and the superheater (74; 134) is heated by means of the working medium.

12. Steam generating stage in accordance with claim 11, **characterized in that** a preheater (76; 138) for water is decoupled from the evaporator (84; 124) in terms of its heating.

13. Steam generating stage in accordance with claim 12, **characterized in that** the preheater (76; 138) is coupled to the superheater (74; 134) in terms of its heating.

14. Steam generating stage in accordance with any one of claims 11 to 13, **characterized in that** the superheater (74; 134) is coupled to a conduit (72) for working medium.

15. Steam generating stage in accordance with claim 14, **characterized in that** a preheater (76; 138) is coupled to a conduit (72) for working medium.

16. Steam generating stage in accordance with any one of claims 11 to 15, **characterized in that** the working medium is air.

17. Steam generating stage in accordance with any one of claims 11 to 16, **characterized by** a first heating system (82) for heating the superheater (74) and a separate second heating system (86) for heating the evaporator (84).

18. Steam generating stage in accordance with claim 17, **characterized in that** a preheater (76) is coupled to the first heating system (82).

19. Steam generating stage in accordance with any one of claims 11 to 18, **characterized in that** a heating region (162) for the evaporator and a heating region (164) for the superheater are arranged behind one another.

20. Steam generating stage in accordance with claim 19, **characterized in that** the heating region (162) for the evaporator and the heating region (164) for the superheater are integrally arranged.

21. Steam generating stage in accordance with claim 19 or 20, **characterized in that** the heating regions (162, 164) lie in an area of exposure to solar radiation (154).

22. Solar thermal power plant including a steam turbine (24) and comprising a steam generating stage in accordance with any one of claims 11 to 21.

## Revendications

1. Procédé pour produire de la vapeur surchauffée grâce à la chaleur solaire, où la vapeur produite dans un évaporateur (84) est surchauffée dans un surchauffeur (74), l'évaporateur (84) étant chauffé par énergie solaire et le surchauffeur (74) étant chauffé par énergie solaire, **caractérisé en ce que** l'évaporateur (84) est chauffé séparément du surchauffeur (74), l'évaporateur (84) étant chauffé directement et le surchauffeur (74) étant chauffé par un fluide de travail.

2. Procédé selon la revendication 1, **caractérisé en ce que** le surchauffeur (74) est chauffé dans un premier système de chauffage (82) et **en ce que** l'évaporateur (84) est chauffé dans un deuxième système de chauffage (86).

3. Procédé selon la revendication 2, **caractérisé en ce que** le premier système de chauffage (82) et le deuxième système de chauffage (86) sont découplés.

4. Procédé selon l'une des revendications précédentes, **caractérisé en ce qu'**un préchauffage de l'eau à évaporer est effectué au moyen de la chaleur résiduelle du surchauffeur (74) ou de l'évaporateur (84).

5. Procédé selon l'une des revendications précédentes, **caractérisé en ce que** l'évaporateur (84) est découplé par une conduite de fluide de travail du fluide de travail pour le chauffage du surchauffeur (74).

6. Procédé selon l'une des revendications précédente, **caractérisé en ce qu'**un préchauffage de l'eau à évaporer est effectué au moyen d'un fluide de travail pour le chauffage du surchauffeur.

7. Procédé selon la revendication 6, **caractérisé en ce qu'**un préchauffeur (76) est disposé en aval du surchauffeur (74) dans la direction d'écoulement du fluide de travail.

8. Procédé selon l'une des revendications précédentes, **caractérisé en ce que** de l'air est utilisé comme fluide de travail.

9. Procédé selon l'une des revendications précédentes, **caractérisé en ce qu'**une zone de chauffage pour l'évaporateur (84) et une zone de chauffage pour le surchauffeur (74) sont chauffées par la même source de chaleur.

10. Procédé selon la revendication 9, **caractérisé en ce qu'**une zone de chauffage pour l'évaporateur (84) et une zone de chauffage pour le surchauffeur (74) sont situées dans une zone d'incidence commune pour le rayonnement solaire.

11. Étage de production de vapeur pour une centrale thermique solaire, comprenant un évaporateur (84 ; 124) pour la génération de vapeur, au moins un récepteur de rayonnement pour le chauffage de l'évaporateur (84), un surchauffeur (74 ; 134) pour le surchauffage de la vapeur et au moins un récepteur de rayonnement pour le chauffage d'un fluide de travail, **caractérisé en ce que** les chauffages de l'évaporateur (84 ; 124) et du surchauffeur (74 ; 134) sont découplés, l'évaporateur (84) étant chauffé directement et le surchauffeur (74 ; 134) étant chauffé au moyen du fluide de travail.

12. Étage de production de vapeur selon la revendication 11, **caractérisé en ce que** le chauffage du préchauffeur (76 ; 138) pour l'eau est découplé de celui de l'évaporateur (84 ; 124).

13. Étage de production de vapeur selon la revendication 12, **caractérisé en ce que** le chauffage du préchauffeur (76) (76 ; 138) est couplé à celui du surchauffeur (74 ; 134).

14. Étage de production de vapeur selon l'une des revendications 11 à 13, **caractérisé en ce que** le surchauffeur (74 ; 134) peut être chauffé au moyen d'un fluide de travail.

15. Étage de production de vapeur selon la revendication 14, **caractérisé en ce qu'**un préchauffeur (76 ; 138) est couplé à une conduite (72) pour le fluide de travail.

16. Étage de production de vapeur selon l'une des revendications 11 à 15, **caractérisé en ce que** le fluide de travail est de l'air.

17. Étage de production de vapeur selon l'une des revendications 11 à 16, **caractérisé par** un premier système de chauffage (82) pour le chauffage du surchauffeur (74) et un deuxième système de chauffage (86) séparé pour le chauffage de l'évaporateur (84).

18. Étage de production de vapeur selon la revendication 17, **caractérisé en ce qu'**un préchauffeur (76) est couplé au premier système de chauffage (82).

19. Étage de production de vapeur selon l'une des revendications 11 à 18, **caractérisé en ce que** qu'une zone de chauffage (162) pour l'évaporateur et une zone de chauffage (164) pour le surchauffeur sont disposées l'une derrière l'autre.

20. Étage de production de vapeur selon la revendication 19, **caractérisé en ce que** la zone de chauffage (162) pour l'évaporateur et la zone de chauffage (164) pour le surchauffeur sont intégrées.

21. Étage de production de vapeur selon la revendication 19 ou la revendication 20, **caractérisé en ce que** les zones de chauffage (162, 164) sont situées dans une zone d'incidence pour le rayonnement solaire (154).

22. Centrale thermique solaire pourvue d'une turbine à vapeur (24) comprenant un étage de production de vapeur selon l'une des revendications 11 à 21.
